# EUROPÄISCHE PATENTANMELDUNG

(11) **EP 0 942 318 A2**
(43) Veröffentlichungstag der Anmeldung: **15.09.1999**
(21) Anmeldenummer: 98117969.0
(22) Anmeldetag: 22.09.1998
(51) Int. Cl.: G02F 1/313

(54) **Optischer Wellenleiterschalter**

(30) Priorität: 07.03.1998 DE 19809889
(71) Anmelder: ROBERT BOSCH GMBH, 70442 Stuttgart (DE)
(72) Erfinder: Bernhard, Winfried, 70839 Gerlingen (DE); Rech, Wolf-Henning, 71229 Leonberg (DE)

(57) **Zusammenfassung**

In faseroptischen Nachrichtenübertragungssystemen werden Schalter benötigt, die den Weg des in Wellenleitern geführten Lichts umschalten können. Dabei soll das Licht des Eingangswellenleiters möglichst vollständig in den selektierten Ausgangswellenleiter gekoppelt werden, während alle anderen Ausgangswellenleiter allenfalls sehr geringe Anteile des Lichts dieses Eingangswellenleiters führen dürfen.
Bei einem optischen Wellenleiterschalter mit als Y-Verzweigung (14) ausgeführtem, optischem Wellenleiter (4) und daran angeordneten Einrichtungen (5, 8) zur lokalen Beeinflussung der Brechzahl, wird dieses Ziel dadurch erreicht, daß in den Ausgangsarmen (12, 13) der Y-Verzweigung (14) zusätzlich jeweils ein die Brechzahl beeinflussender Modulator (9, 10) vorgesehen ist, der jeweils so steuerbar ist, daß die in einem Ausgangsarm (12, 13) durch eine der Einrichtungen (5, 8) erzielte, erhöhte Durchgangsdämpfung durch eine erhöhte Modulatordämpfung ergänzt wird.

## Beschreibung

### Stand der Technik

Die Erfindung geht aus von der Gattung, wie im unabhängigen Patentanspruch 1 wiedergegeben.

In faseroptischen Systemen, speziell Nachrichtenübertragungssystemen, werden Schalter benötigt, die den Weg des in Wellenleitern/Glasfasern geführten Lichts umschalten können. Ein solcher Schalter besitzt typischerweise einen oder mehrere Eingangswellenleiter und einen oder mehrere Ausgangswellenleiter, die durch eine Schaltmatrix miteinander verbunden werden. Die Schaltmatrix bewirkt eine Kopplung von einem Eingangs- in jeweils einen Ausgangswellenleiter. (Proceedings ECIO'97, Stockholm, Seiten 10/JWA4-1 bis JWA4-6/15, Mats Gustavsson et al.: "Network Requirements on Optical Switching Devices")

Meistens ist es dabei erwünscht, daß das Licht des Eingangswellenleiters möglichst vollständig in den selektierten Ausgangswellenleiter gekoppelt wird (hohe Transmission = geringe Einfügungsdämpfung) und daß alle anderen Ausgangswellenleiter allenfalls sehr geringe Anteile des Lichts dieses Eingangswellenleiters führen (niedriges Übersprechen = hohe Übersprechdämpfung). Das soll in einem weiten Bereich der optischen Wellenlänge erfüllbar sein, für Telekommunikationszwecke typischerweise von 1,2 bis 1,6 µm. Übliche Anforderungen an eine in Telekommunikationsnetzen eingesetzte optische Schaltmatrix sind Einfügungsdämpfungen von < 5 bis < 10 dB und Übersprechdämpfungen von > 30 bis > 60 dB.

Optische Schalter sind in einer Reihe von Technologien und verschiedenen Schaltprinzipien realisiert.

Relaisartige Schalter verschieben eine Glasfaser vor einem Array von gegenüberliegenden Glasfasern, so daß bei präziser Ausrichtung jeweils eine Kopplung zwischen zwei Fasern zustande kommt. Einfügungs- und Übersprechdämpfung sind hervorragend, aber die Umschaltzeit ist relativ lang, und der Fertigungsaufwand ist groß. Gleiches gilt für solche Schalter, die das Licht jeder Glasfaser durch eine Kollimationsoptik aufweiten und dann mit drehbaren oder verschiebbaren Spiegeln, Prismen und/oder beweglichen Linsen eine veränderbare optische Kopplung zwischen verschiedenen Fasern herstellen.

Für integriert-optische Schalter, die vollständig mit Wellenleitern arbeiten, sind mehrere Schaltprinzipien bekannt.

Entweder wird das Licht einer Eingangsfaser mit einem passiven Leistungsteiler auf mehrere Wege aufgeteilt und danach in jeden Weg ein schaltbarer optischer Verstärker eingefügt, der im ausgeschalteten Fall hohe Dämpfung aufweist und im eingeschalteten Fall die Verluste bei der Lichtaufteilung (aktiv) kompensiert. Solche Verstärker können zusammen mit den passiven Leistungsteilern auf Halbleiterbasis hergestellt werden (Halbleiter-Laser-Verstärker, SLA). Der Verstärkungsprozeß (auf Grund induzierter Emission) ist allerdings schmalbandig und daher auf einen engen Wellenlängenbereich begrenzt. Außerdem rauscht der optische Verstärker zusätzlich, verursacht bei hohen Eingangsleistungen Verzerrungen, die typischen Wellenleiter in Halbleitersubstraten sind in ihren Eigenschaften polarisationsabhängig, und die Realisierung für den interessierenden Wellenlängebereich (1,2 bis 1,6 µm) muß auf sehr teuren InP-Halbleitern erfolgen.

Im Gegensatz dazu arbeiten rein passive integriert-optische Wellenleiterschalter durch Modifikation der Brechzahlverteilung im Bereich der Koppelstelle zweier Wellenleiter. Dafür kommen entweder interferometrische Strukturen in Frage, z.B ein Mach-Zehnder-Interferometer (MZI) mit zwei Ein- und zwei Ausgängen, bei dem durch Veränderung der Brechzahl (Laufzeit, Phase) in einem oder beiden Armen die Kopplung zwischen Ein- und Ausgängen verändert werden kann (2x2-Schalter mit "bar"- oder "cross"-Zustand), oder X- oder Y-Verzweigungen mit einem so geringen Öffnungswinkel, daß eine Brechzahlerhöhung auf der einen und/oder eine Absenkung auf der anderen Seite ausreicht, das Licht definiert in einen der beiden Ausgänge zu lenken. Letzterer Typ hat den Vorteil, daß die Schaltfunktion über einen weiten Bereich der Brechzahländerung gewährleistet ist (sog. digitaler optischer Schalter, DOS), während beim MZI-Schalter die Brechzahl sehr präzise verändert werden muß.

Als Mechanismus zur Brechzahländerung kommt eine Temperaturveränderung in Frage (Proc. 21st Eur. Conf. on Comm. (ECOC'95)- Brussels, Th.L.3.5, Seiten 1063 bis 1066, R. Moosburger et al.: "A novel polymer digital optical switch with high temperature stability"). Dafür muß das Wellenleitermaterial einen hohen thermooptischen (TO) Koeffizienten aufweisen; typischerweise kommen organische Materialien (Polymer u.a. Kunststoffe) zum Einsatz. Die Schaltzeit liegt im Bereich 1 ms, und das Schaltverhalten ist unabhängig von der Lichtpolarisation. Statt dessen kann auch der elektrooptische Effekt (EO) in bestimmten Materialien ausgenutzt werden, der eine Brechzahländerung unter Einfluß eines starken elektrischen Gleichfeldes verursacht (Appl. Phys. Lett. 51 (16), 19 October 1987, Seiten 1230 bis 1232, Y. Silberberg et al.: "Digital optical switch"); hier ist die Schaltzeit sehr kurz (ps-Zeitskala), aber der Effekt wirkt in Abhängigkeit von der Lichtpolarisation unterschiedlich. Materialien mit hohem elektrooptischem Effekt, z.B. LiNbO₃, sind darüberhinaus teuer.

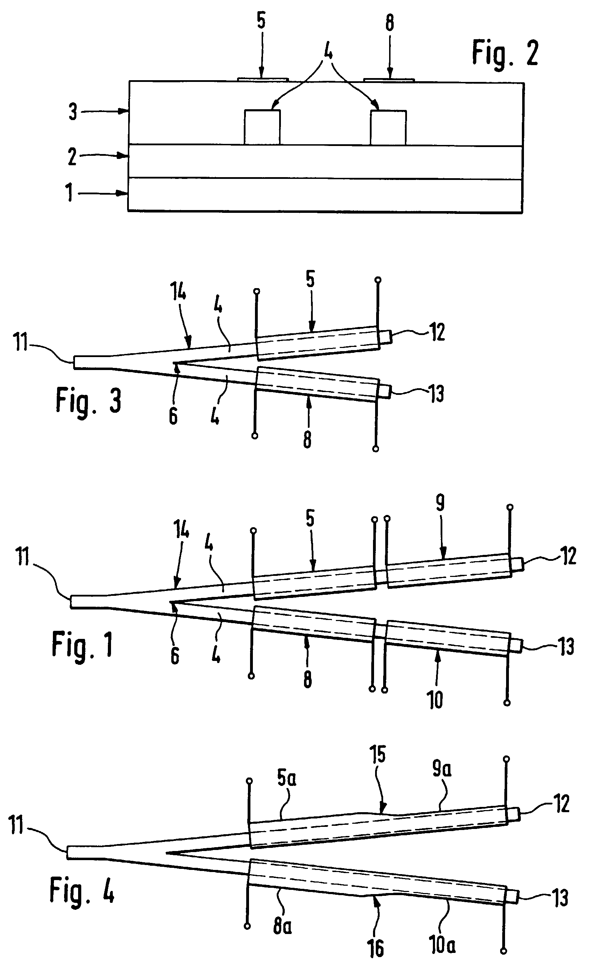

Ein weiteres Schaltungsprinzip ist in thermooptischen digitalen optischen Schaltern (TO-DOS) verwirklicht. Hierfür werden gemäß dem Schnittbild der Figur 2 und der Ansicht nach Figur 3 in Polymerschichten 2, 3, die z.B. auf einem Siliziumsubstrat 1 (in Figur 3 nicht dargestellt) aufgebracht sind, Wellenleiter 4 hergestellt. Eine Ausführungsform ist der Streifenwellenleiter in einem Drei-Schicht-System; es sind aber auch andere optische Konfigurationen denkbar. Oberhalb der Wellenleiter 4, d.h. gegenüber dem als Wärmesenke dienenden Si-Substrat 1, werden Heizleiter 5, 8 in der Nähe der Wellenleiter 4 hergestellt, die bei Stromfluß infolge der entstehenden elektrischen Verlustleistung die Temperatur im Bereich um die Wellenleiter 4 erhöhen und dadurch die Materialbrechzahl absenken. Typische Größenordnungen für die Brechzahldifferenz Wellenleiterkern-Substrat sind 5 x 10 ⁻³, während der thermooptische Koeffizient typischerweise bei 10⁴ K⁻¹ liegt. Insofern ist also eine Temperaturerhöhung von 50 K im Wellenleiterkern ausreichend, um die Lichtführung aufzuheben. Für die Umschaltung in einer sich allmählich öffnenden Y-Verzweigung 14 genügen bereits geringere Temperaturdifferenzen zwischen den beiden Wellenleiterausgängen in der Größenordnung von 20 K. Dabei erfolgt die gewünschte Überkopplung des Lichts in einen der Ausgänge um so vollständiger, je kleiner der Öffnungswinkel der Y-Verzweigung ist - dadurch wächst aber die Baulänge des Wellenleiterschalters. Da die zur Erzielung eines hohen thermooptischen Koeffizienten verwendeten Kunststoff-Materialien aber eine wenn auch geringe optische Absorption aufweisen, führt eine vergrößerte Baulänge gleichzeitig zu einer höheren Einfügungsdämpfung. Außerdem verursacht die Y-Verzweigung selbst gegenüber einem einfachen geraden oder gekrümmten Wellenleiter eine Zusatzdämpfung, da sich die Aufteilung des Eingangswellenleiters 11 in die Ausgänge 12, 13 im Bereich des "Zwickels" 6 des "Y" nicht perfekt realisieren läßt. Die mit einem solchen TO-DOS praktisch erreichbare Übersprechdämpfung liegt im Bereich von 20 bis 25 dB und ist deshalb meistens nicht ausreichend. Daher werden häufig für eine Schaltstufe zwei DOS-Schalter kaskadiert, um dadurch die Übersprechdämpfung auf >40 dB zu erhöhen - dieses Vorgehen erhöht aber wiederum die Einfügungsdämpfung deutlich. Neben dem 1x2-Y-TO-DOS sind auch 1x3-Schalter nach dem gleichen Prinzip bekannt. Aus diesen Basiselementen können durch Kaskadierung größere Schaltmatrizen, z.B. 4x4, 8x8 oder 1x16, aufgebaut werden.

Aus der Literatur (Appl. Phys. Lett. 35, Seiten 256 bis 258 (1979), A. Neyer, W. Sohler) ist eine elektrooptische Modulatorschaltung bekannt, die durch Veränderung der Brechzahl (EO) in einem in LiNbO₃ hergestellten Wellenleiter eine Ein-/Aus-Schaltfunktion realisiert. Dabei wird das Brechzahlprofil des Wellenleiters so verändert, daß das in diesem geführte Licht teilweise ins umgebende Substrat ausgekoppelt wird. Mit diesem "Cut-off-Modulator" wurde eine hohe Unterdrückung im Ausschaltfall erreicht, wenn die Länge der brechzahlveränderten Zone groß ist.

### Vorteile der Erfindung

Der Anmeldungsgegenstand mit den Merkmalen des Patentanspruches 1 hat folgenden Vorteil: Durch die Erfindung wird ein Wellenleiterschalter, insbesondere ein digitaler thermooptischer Wellenleiterschalter, so verbessert, daß die Übersprechdämpfung gegenüber der bekannten Ausführung wesentlich erhöht wird, ohne daß dadurch die Baulänge oder die Einfügungsdämpfung wesentlich vergrößert werden muß.

Kern der Erfindung ist die Ergänzung des bekannten digitalen optischen Wellenleiter-Umschalters um einen sich anschließenden Wellenleiter-Modulator, der im jeweils eingeschalteten Arm ebenfalls eingeschaltet, in dem ausgeschalteten Arm ebenfalls ausgeschaltet wird und die Übersprechdämpfung dadurch erhöht, daß die durch den Umschalter und die durch den Modulator erreichten Durchgangsdämpfungen sich für den unerwünschten Lichtweg addieren.

Gegenüber einer bekannten Ausführungsform mit zwei kaskadierten Umschaltern besteht der Vorteil, daß der Modulator im Gegensatz zum Umschalter keine weitere spezielle Wellenleiterstruktur benötigt, sondern als Bestandteil eines einfachen, ohnehin vorhandenen, geraden oder gekrümmten Wellenleiters realisiert werden kann. Dadurch vergrößert sich die Baulänge des gesamten Schalterbauelements gegenüber dem Bauelement mit nur einem Umschalter nicht, und ebenso treten keine zusätzlichen Einfügungsverluste, etwa durch eine weitere nicht perfekte Y-Verzweigung, auf. Im Gegenteil ist es sogar möglich, die Baulänge des ersten Umschalters zu verkürzen, da geringere Anforderungen an dessen Übersprechdämpfung gestellt werden, wenn der nachfolgende Modulator eine hohe Übersprechdämpfung erlaubt; das kann sogar zu einer Verringerung der gesamten Einfügungsverluste führen.

Vorteilhafte Weiterbildungen sind in den abhängigen Ansprüchen angegeben, deren Merkmale auch, soweit sinnvoll, miteinander kombiniert werden können.

Auf Grund der Ausführung als thermooptischer Wellenleiterschalter, bei der die Umschaltung zwischen den beiden Armen der Y-Verzweigung und die Lichtmodulation jeweils durch eine Veränderung der lokalen Temperatur mittels einer in der Nähe des Wellenleiters angebrachten, stromduchflossenen Elektrode (Heizleiter) geschieht, ist die erfindungsgemäße Kombination aus Umschalter und Modulator besonders vorteilhaft realisierbar, da hierfür ein einziger stromdurchflossener Heizleiter je Arm ausreicht, der im Verlauf seiner Längsausdehnung bezüglich seiner Querdimension so strukturiert ist und in Bezug auf den Wellenleiter so angeordnet ist, daß im Bereich der Y-Verzweigung keine Temperaturerhöhung auf der eingeschalteten Seite und eine mittlere Temperaturerhöhung auf der ausgeschalteten Seite, im weiteren Verlauf des ausgeschalteten Wellenleiters dagegen eine hohe Temperaturerhöhung erfolgt, die dann in diesem als Modulator wirkenden Wellenleiterabschnitt das Licht fast vollständig auskoppelt. Insofern ist für das erfindungsgemäße Bauteil gegenüber der bekannten, grundlegenden Ausführung des digitalen thermooptischen Wellenleiter-Umschalters nur eine andere Gestaltung der Elektrode (des Heizleiters) (eine andere Lithographiemaske) notwendig, wodurch kein wesentlicher zusätzlicher Herstellungsaufwand für die wesentliche Verbesserung der optischen Eigenschaften entsteht.

### Zeichnung

Ein Ausführungsbeispiel der Erfindung ist in der Zeichnung dargestellt und im Folgenden näher erläutert. Dabei sind bei mehreren Figuren jeweils dieselben Bezugszeichen für im wesentlichen gleiche Teile verwendet. Schematisch ist gezeigt in
- Figur 1:: eine Aufsicht auf ein Ausführungsbeispiel eines Wellenleiterschalters nach der Erfindung,
- Figur 2:: ein Schnitt durch einen bekannten Wellenleiterschalter mit Y-Verzweigung,
- Figur 3:: eine zugehörige Aufsicht,
- Figur 4 bis 9:: weitere Aufsichten auf weitere Ausführungsbeispiele.

### Beschreibung eines Ausführungsbeispiels

Der erfindungsgemäße optische Wellenleiterschalter beruht auf dem beschriebenen, integriert-optischen TO-DOS mit einer Y-Verzweigung. Dabei dient diese Grundstruktur wie beim bekannten Bauelement der eigentlichen Umschaltfunktion; die damit erreichbare Übersprechdämpfung ist aber nur insoweit von Belang, als das übersprechende Licht dem Nutzweg verlorengeht. Hierfür ist ein Wert von 15 dB (d.h. 3% Verlust, oder 0,15 dB Einfügungsdämpfung) sicher ausreichend, wozu ein kürzerer TO-DOS genügt und größere Fertigungsstreuungen zulässig sind. Hingegen wird die weitere Absenkung des Lichtpegels im nicht geschalteten Weg zur Vermeidung von Störungen durch ein zweites, nachgeschaltetes Bauelement bewirkt, das im Folgenden als Modulator bezeichnet wird. Dieses in Figur 1 dargestellte Bauelement arbeitet ebenfalls thermooptisch mittels Heizleitern 9, 10, koppelt aber das unerwünschte Licht nicht in einen weiteren Wellenleiter über, sondern in das Substrat aus. Dazu ist eine größere Brechzahländerung erforderlich (stärkere Temperaturerhöhung), dafür entfällt aber die Notwendigkeit einer speziellen Wellenleiterstruktur.

### Abwandlungsmöglichkeiten

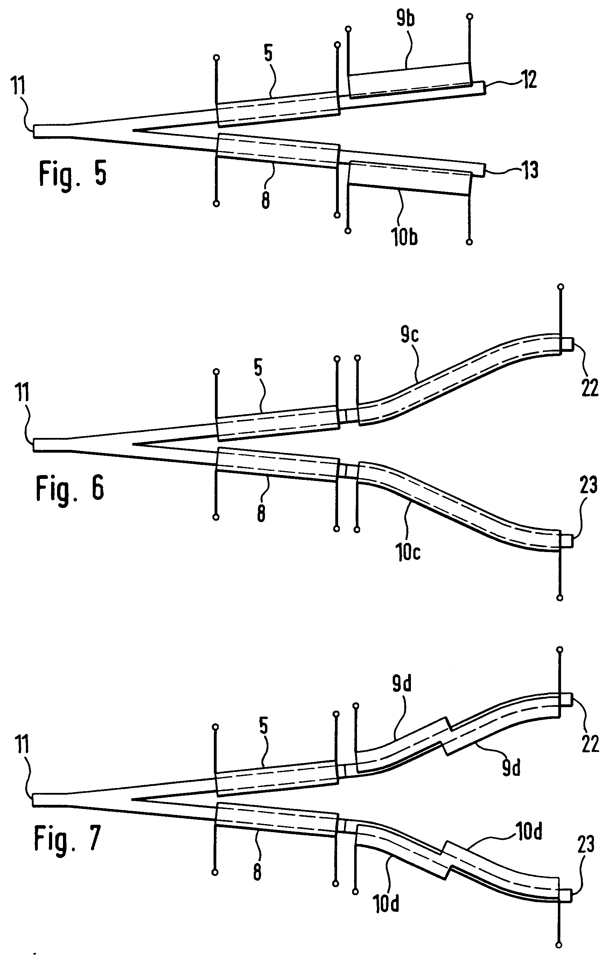

Da sich an den TO-DOS üblicherweise ohnehin entweder S-förmig gebogene Wellenleiter 22, 23 anschließen (Figuren 6, 7, 9), um die beiden Ausgänge auf den zur Glasfaserankopplung notwendigen Mindestabstand von 250µm zu bringen, oder auch gerade oder gebogene Wellenleiterverbindungen zu weiteren Schaltstufen, ist eine Integration des zusätzlichen Modulators ohne Nachteile für den Lichtweg, insbesondere ohne zusätzliche Wellenleiterstrukturen und ohne größere Baulänge, möglich.

Im Bereich des Cut-off-Modulators muß eine stärkere Temperaturerhöhung erreicht werden als im Bereich des TO-DOS. Das kann sehr einfach mit einem gemeinsamen Heizleiter geschehen, indem der Abstand (senkrecht zur Zeichnungsebene der Figur 1) zu den Wellenleitern enger gewählt wird oder wie in Figur 4 der Widerstandsbelag (Widerstand je Länge) durch eine Reduzierung der Breite des Heizleiters 15, 16 (mit seinen Abschnitten 5a, 9a beziehungsweise 8a, 10a) erhöht wird.

Die Anordnung des Heizleiters 9, 9a bis 9e, 10, 10a bis 10e des Cut-off-Modulators kann direkt (Figur 1, 4, 6, 8, 9) oder schräg oberhalb (Figur 5, 7, 8) des Wellenleiters 12, 13, 22, 23, 32, 33 erfolgen.

Insbesondere dann, wenn der Cut-off-Modulator im Bereich einer Wellenleiterkrümmung realisiert wird, erleichtert diese Krümmung die Auskopplung des Lichts zur Krümmungsaußenseite hin - dann kann es zweckmäßig sein, den Heizleiter 9d, 10d zur Krümmungsinnenseite hin zu verlagern (Figur 7).

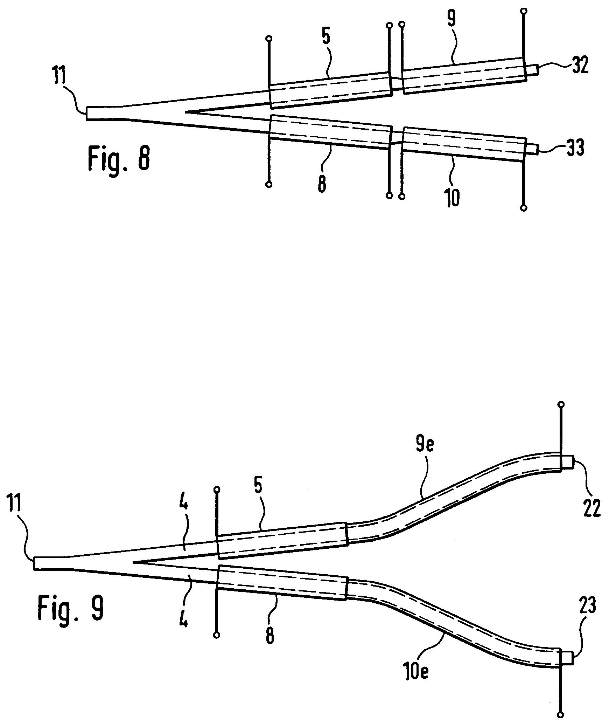

Zur Verstärkung der Auskopplung, insbesondere in einem geraden Wellenleiterstück, kann der Wellenleiter 32, 33 (Figur 8) im Bereich des Modulators schmaler hergestellt werden, wobei im Übergangsbereich ein adiabatischer Taper (allmählicher Breitenübergang) sehr geringe Zusatzverluste ergibt. Der schmalere Wellenleiter 32, 33 führt dann das Licht schwächer, weshalb sich das optische Feld stärker ins Substrat ausdehnt und eine Auskopplung mit einer geringeren Temperaturdifferenz möglich wird.

Heizleiter 9e, 10e (Figur 9), die über die Bereiche der geraden Wellenleiterabschnitte 4 der Y-Verzweigung bis weit über die anschließenden S-Bögen (in denen keine Kopplung mehr erfolgt) hineinreichen und die außerdem gegenüber den Heizleitern 5, 8 des TO-DOS unterschiedliche Breiten aufweisen, bilden eine bevorzugte Ausführungsform eines erfindungsgemäßen Wellenlängenschalters.

Bei einer kaskadierten Anordnung von DOS-Schaltelementen auf einem oder mehreren Substraten in einer Struktur M x N (M,N ≥ 1) genügt es, den Cut-off-Modulator einmal auf der Seite der N Ausgangswellenleiter zu realisieren und bei allen nicht geschalteten Wellenleitern durch den Heizleiter Strom zu leiten, um die erfindungsgemäße Verbesserung der Übersprechdämpfung zu erhalten, ohne daß nach jeder Schaltstufe ein eigener Modulator eingefügt werden muß.

## Patentansprüche

1. Optischer Wellenleiterschalter mit als Y-Verzweigung (14) ausgeführtem, optischem Wellenleiter und daran angeordneten Einrichtungen zur lokalen Beeinflussung der Brechzahl,
dadurch gekennzeichnet, daß in den Ausgangsarmen (12, 13) der Y-Verzweigung (14) zusätzlich jeweils ein die Brechzahl beeinflussender Modulator vorgesehen ist, der jeweils so steuerbar ist, daß die in einem Ausgangsarm durch eine der Einrichtungen erzielte, erhöhte Durchgangsdämpfung durch eine erhöhte Modulatordämpfung ergänzt wird.

2. Optischer Wellenleiterschalter nach Anspruch 1, dadurch gekennzeichnet, daß die Einrichtungen und die Modulatoren Heizleiter (5, 8, 9, 9a bis 9e, 10, 10a bis 10e) zur thermischen Beeinflussung der Brechzahl aufweisen.

3. Optischer Wellenleiterschalter nach Anspruch 2, dadurch gekennzeichnet, daß die Heizleiter (9, 9a, 9e, 10, 10a, 10e) der Modulatoren für eine stärkere Temperaturerhöhung vorgesehen sind, als die Heizleiter (5, 8) der Einrichtungen.

4. Optischer Wellenleiterschalter nach Anspruch 3, dadurch gekennzeichnet, daß der Abstand des Heizleiters (9, 10) eines Modulators zum Wellenleiter des entsprechenden Ausgangsarmes (12, 13) kleiner ist, als der entsprechende Abstand des Heizleiters (5, 8) der dem Ausgangsarm (12, 13) zugeordneten Einrichtung.

5. Optischer Wellenleiterschalter nach Anspruch 2, 3 oder 4, dadurch gekennzeichnet, daß der Heizleiter (9, 9a, 9e, 10, 10a, 10e) eines Modulators in Reihe mit dem Heizleiter (5, 8) einer Einrichtung geschaltet ist.

6. Optischer Wellenleiterschalter nach einem der vorangehenden Ansprüche, dadurch gekennzeichnet, daß an einem Ausgangsarm (12, 22, 13, 23) der Heizleiter (9, 9a, 9e, 10, 10a, 10e) eines Modulators und einen größeren Widerstand aufweist als der Heizleiter (5, 8) der zugehörigen Einrichtung.

7. Optischer Wellenleiterschalter nach einem der vorhergehenden Ansprüche, dadurch gekennzeichnet, daß der Heizleiter (9c, 9d, 9e, 10c, 10d, 10e) eines Modulators an einem gekrümmten Teil eines Ausgangsarms (22, 23) angeordnet ist.

8. Optischer Wellenleiterschalter nach Anspruch 7, dadurch gekennzeichnet, daß der gekrümmte Teil S-förmig ist.

9. Optischer Wellenleiterschalter nach Anspruch 7 oder 8, dadurch gekennzeichnet, daß der Heizleiter (9d, 10d) des Modulators zur Krümmungsinnenseite hin verlagert ist.

10. Optischer Wellenleiterschalter nach einem der Ansprüche 2 bis 9, dadurch gekennzeichnet, daß an einem Ausgangsarm (12, 22, 13, 23) der Heizleiter (9a, 9e, 10a, 10e) des Modulators und der Heizleiter (5, 8) der Einrichtung zu einem gemeinsamen Heizleiter vereinigt sind.

11. Optischer Wellenleiterschalter nach einem der vorangehenden Ansprüche, dadurch gekennzeichnet, daß der Wellenleiter (32, 33) im Bereich eines Modulators eine reduzierte Breite aufweist, kombiniert mit einem allmählichen Breitenübergang.

12. Optischer Wellenleiterschalter nach einem der vorangehenden Ansprüche, dadurch gekennzeichnet, daß bei einer kaskadierten Anordnung optischer Wellenleiterschalter nur auf der Seite aller Ausgangswellenleiter jeweils ein Modulator vorgesehen ist, nicht aber bei allen vorgeschalteten Schaltstufen.

13. Optischer Wellenleiterschalter nach einem der vorangehenden Ansprüche, dadurch gekennzeichnet, daß die Y-Verzweigung (14) mit den Einrichtungen und Modulatoren ein integriertes Bauteil bilden.

14. Optischer Wellenleiterschalter nach einem der vorangehenden Ansprüche, dadurch gekennzeichnet, daß der Modulator am Ausgangsarm mit der momentan geringeren Dämpfung jeweils als unabhängig verstellbarer Pegelsteller dient.
